# EUROPEAN PATENT SPECIFICATION

(11) **EP 1 852 523 B1**
(45) Date of publication and mention of the grant of the patent: **22.08.2018**
(21) Application number: 06713069.0
(22) Date of filing: 31.01.2006
(51) Int. Cl.: C23C 22/08, C23C 22/34, C23C 22/36, C23C 22/40, C23C 22/42, C23C 22/44, C23C 22/48, C23C 22/53, C23C 22/56, C09D 5/08

(54) **AQUEOUS SURFACE TREATING AGENT FOR METAL MATERIAL, SURFACE TREATING METHOD AND SURFACE-TREATED METAL MATERIAL**
WÄSSRIGES OBERFLÄCHENBEHANDLUNGSMITTEL FÜR METALLMATERIAL, OBERFLÄCHENBEHANDLUNGSVERFAHREN UND OBERFLÄCHENBEHANDELTES METALLMATERIAL
AGENT AQUEUX DE TRAITEMENT DE SURFACE POUR UNE MATIÈRE EN MÉTAL, PROCÉDÉ DE TRAITEMENT DE SURFACE ET MATIÈRE EN MÉTAL TRAITÉE EN SURFACE

(30) Priority: 02.02.2005 JP 2005027032
(43) Date of publication of application: 07.11.2007
(73) Proprietor: NIHON PARKERIZING CO., LTD., Chuo-ku, Tokyo 103-0027 (JP)
(72) Inventor: YAMAGUCHI, Hidehiro, 1-chome, Chuo-ku, Tokyo, 1030027 (JP); NOMURA, Shinji, 1-chome, Chuo-ku, Tokyo, 1030027 (JP); SUZUKI, Tatsuya, 1-chome, Chuo-ku, Tokyo, 1030027 (JP)
(74) Representative: Hoffmann Eitle
(86) International application number: PCT/JP2006/301926
(87) International publication number: WO 2006/082946

(56) References cited:
- EP-A1- 0 949 353
- WO-A1-01/12876
- WO-A1-2004/076718
- JP-A- 2003 105 562
- US-A- 5 206 285

## Description

### TECHNICAL FIELD

This invention relates to an aqueous surface-treating agent for metallic materials used to form on the surfaces of sheet coils and moldings made of a metal a novel coating having together not only excellent corrosion resistance and adhesion, but also acid resistance and alkali resistance; a metal surface-treating process; and a surface-treated metallic material. More specifically, this invention relates to an aqueous surface-treating agent for metallic materials used to form, on molded and/or wrought products such as car bodies, automotive parts, building materials and parts for household appliances; cast products; sheet coils; etc., made of
zinc-containing metal-plated steel sheets, steel sheets and/or aluminum-containing metallic materials, a coating having together not only excellent corrosion resistance and adhesion, but also acid resistance and alkali resistance; a metal surface-treating process; and a surface-treated metallic material.

### BACKGROUND ART

As a technique using an organic resin coating, a one pack-type aqueous coating agent for steels is disclosed in JP-A-2001-353750 which contains 5 to 30 % by mass of a water-dispersed resin, 0.1 to 20 % by mass of silica particles and 0.01 to 20 % by mass of an organic titanate compound, respectively as a concentration of solid matter; is excellent in bath stability; is capable of forming a coating excellent in corrosion resistance, solvent resistance, alkali resistance, paint adhesion and coating adhesion; and is suitable for application onto steels such as zinc-containing metal-coated steels and uncoated steels.

There are disclosed in JP-A-2003-105562 a non-chromium-type surface-treated steel sheet excellent in not only corrosion resistance but also fingerprint resistance, blackening resistance and paint adhesion obtained using a surface-treating agent containing a specific resin compound (A), a cationic urethane resin (B) having at least one cationic functional group selected from primary, secondary and tertiary amino groups and quaternary ammonium salt groups, at least one silane coupling agent (C) having a specific reactive functional group and a specific acid compound (E), in which surface-treating agent, the contents of the cationic urethane resin (B) and the silane coupling agent (C) are respectively in the prescribed ranges; and a process for preparation thereof.
Further surface-treatment agents for metallic materials are described in WO 01/12876 A1 and EP 0 949 353 A1.

However, these techniques have a drawback that when the treating agent is an anion-type one, it gives only poor alkali resistance, and when the treating agent is an cation-type one, it gives only poor acid resistance, and, thus, it is the present state of things that their use is limitative.

As seen from the above, it is the present state of things that such a surface-treating agent as is usable in place of one giving a chromate coating is not obtained, and development of a surface-treating agent and a surface-treating process capable of generally solving the above problems has strongly been desired.

This invention aims to provide a surface-treating agent for metallic materials which solves the above problems which prior arts have, and is capable of forming a novel coating having together not only excellent corrosion resistance and adhesion, but also acid resistance and alkali resistance; a surface-treating process using the surface-treating agent; and a metallic material surface-treated therewith.

The present inventors have intensely studied to solve the above problems, and as a result, they found that a novel coating having together not only excellent corrosion resistance and adhesion, but also acid resistance and alkali resistance can be formed by treating a metallic surface with an extremely stable aqueous chemical agent which contains an organic silicon compound having in one molecule a specific functional group (a) and a specific functional group (b) in a specific mutual ratio, and a resin; and completed this invention.

The present disclosure relates to an aqueous metal surface-treating agent wherein an organic silicon compound (P) which has, in one molecule, two or more of functional groups (a) represented by the formula -SiR¹R²R³ (wherein R¹, R² and R³ represent mutually independently alkyl groups, alkoxyl groups or hydroxyl groups, and at least one of them is an alkoxyl group) and at least hydrophilic functional group (b) selected from hydroxyl groups (which are different from those containable in the functional groups (a)), amino groups, carboxyl groups, phosphoric acid groups, phosphonic acid groups, sulfonic acid groups, polyoxyethylene chains and amido groups, and has a molecular weight, per one functional group (b), of 100 to 10,000; and at least one organic polymer (Q) selected from urethane resins, epoxy resins, acrylic resins, phenol resins, polyester resins and polyolefin resins are compounded (Embodiment 1). Embodiment 1 is not in accordance with the claimed invention.

The organic silicon compound can generally be formed, for example, by reaction between the following organic compound (A) and the following organic compound (B), but the organic silicon compound and the product by the reaction are not necessarily identical, and can mutually be different a little, and both can effectively be used in the invention,

Thus, this invention relates to an aqueous metal surface-treating agent wherein an organic compound (A) having a functional group (1), an organic compound (B) having a functional group (II) capable of reacting with the functional group (1) and at least one hydrophilic functional group (III) selected from hydroxyl groups (which are different from those containable in the following functional groups (a)), primary, secondary and tertiary amino groups, quaternary ammonium groups, phosphoric acid groups, phosphonic acid groups, sulfonic acid groups and polyoxyethylene chains, all these groups and chains being different from those capable of being included in the functional groups (I) and/or the functional groups (II), and at least one organic polymer (Q) selected from urethane resins, epoxy resins, acrylic resins, resins, polyester resins and polyolefin resins are compounded; and at least one of the organic compound (A) and the organic compound (B) is an organic silane compound having a functional group (a) represented by the formula -SiR¹R²R³ (wherein R¹, R² and R³ are as defined above) (Embodiment 2).
The organic compounds (A) and (B) are selected from certain compounds as specified in the appended claim 1.

This invention also relates to a process for surface-treating a metallic material which comprises applying the above surface-treating agent onto the surface of the metallic material, and drying the resulting surface-treating agent to form a coating of 10 to 3,000 mg/m² in terms of SiO₂; and a metallic material surface-treated by the surface-treating process.

A surface-treated metallic material obtained by applying the surface-treating agent of the invention onto the surface of a metallic material, and drying the resulting surface-treating agent has together not only excellent corrosion resistance and adhesion, but also acid resistance and alkali resistance.

### BEST MODE FOR CARRYING OUT THE INVENTION

The number of the functional group (a) in the organic silicon compound (P) as an indispensable component of the aqueous metal surface-treating agent according to Embodiment 1 of the present disclosure needs to be 2 or more. When the number of the functional group (a) is one, adhesion strength to the surface of a metallic material is lowered. The carbon number of the alkyl group and the alkoxyl group in the definition of R¹, R² and R³ in the functional group (a) is not particularly limited, but is preferably 1 to 6, further preferably 1 to 4 and still further preferably 1 or 2. As to the proportion of presence of the functional group (b), the molecular weight of the organic silicon compound per one functional group (b) needs to be 100 to 10,000 in Embodiment 1,
and is preferably 200 to 5,000. When the molecular weight per one functional group (b) is less than 100, the water resistance of a coating formed is strikingly lowered. On the other hand, when the molecular weight per one functional group (b) is more than 10,000, the organic silicon compound becomes hard to dissolve or disperse stably.

The process for preparation of the organic silicon compound (P) is not particularly limited, and there can, for example, be mentioned (1) a process of obtaining an organic silicon compound by reaction of a compound having two or more active hydrogen-containing functional groups with a chlorosilane, (2) a process of obtaining an organic silicon compound by reaction of a silane coupling agent having a vinyl group with a vinyl compound copolymerizable with it, (3) a process of obtaining an organic silicon compound by reaction of a silane coupling agent having a specific reactive functional group with a silane coupling agent having at least one reactive functional group capable of reacting with the former reactive functional group, (4) a process of obtaining an organic silicon compound by reaction of a silane coupling agent having a specific reactive functional group with a compound having a functional group reactive with the organic functional group of the silane coupling agent, (5) a process of introducing a hydrophilic group into a multifunctional silane coupling agent, etc.

As to the functional group (b), it is possible to use an organic silicon compound having a functional group (b) in the structure, or it is also possible to react a silane coupling agent having two or more of the functional groups (a) with a compound having a functional group (b) to form an organic silicon compound. As the compound having a functional group (b), there can be mentioned hydroxylamine, polyhydric alcohols, aminethiol, aminesulfonic acid, hydroxyphosphonic acid, amino acids, etc.

The aqueous metal surface-treating agent of the invention (Embodiment 2) is, as mentioned above, an aqueous metal surface-treating agent wherein an organic compound (A) having a functional group (I), an organic compound (B) having a functional group (II) capable of reacting with the functional group (I) and at least one hydrophilic functional group (III) selected from hydroxyl groups (which are different from those containable in the following functional groups (a)), primary, secondary and tertiary amino groups, quaternary ammonium groups, phosphoric acid groups, phosphonic acid groups, sulfonic acid groups, and polyoxyethylene chains, all these groups and chains being different from those capable of being included in the functional groups (I) and/or the functional groups (II), and at least one organic polymer (Q) selected from urethane resins, epoxy resins, acrylic resins, polyester resins and polyolefin resins are compounded; and at least one of the organic compound (A) and the organic compound (B) is an organic silane compound having a functional group (a) represented by the formula -SiR¹R²R³ (wherein R¹, R² and R³ are as defined above).

When the organic compound (B) does not have any hydrophilic functional group (III), or when the aqueous metal surface-treating agent (Embodiment 2) contains only an organic compound (A) having a functional group (I) and a functional group (a) and does not contain the organic compound (B), such organic compound (B) or such organic compound (A) is unstable in an aqueous system or does not dissolve therein, which is an undesirable thing.

The organic compound (A) is selected from the group consisting of epoxy silanes such as 3-glycidyloxypropyltrimethoxysilane, 3-glycidyloxypropylmethyldimethoxysilane and 2-(3,4-epoxycyclohexyl)ethyltrimethoxysilane; amino silanes such as N-(2-aminoethyl)-3-aminopropylmethyldimethoxysilane, N-(aminoethyl)-3-aminopropyltrimethoxysilane and 3-aminopropyltriethoxysilane; mercapto silanes such as 3-mercaptopropyltrimethoxysilane; isocyanato silanes such as 3-isocyanatopropyltrimethoxysilane and 3-isocyanatopropyltriethoxysilane; epoxy compounds selected from sorbitol polyglycidyl ethers, polyglycerol polyglycidyl ethers and pentaerythritol polyglycidyl ethers; isocyanate compounds such as tolylene diisocyanate, diphenymethane diisocyanate, naphthalene diisocyanate and xylylene
diisocyanate; methylol group-containing compounds such as melamine and dimethylolpropionic acid; active methylene-containing compounds such as acetoacetoxy acrylate; and imido compounds such as N.N'-isopropylcarbodiimide.

The organic compound (B) is selected from the group consisting of amino silanes such as N-(2-aminoethyl)-3-aminopropylmethyldimethoxysilane, N-(aminoethyl)-3-aminopropyltrimethoxysilane and 3-aminopropyltriethoxysilane; amine compounds selected from isophoronediamine, piperazine and diphenylmethanediamine; polyoxyethylene adducts of epoxy compounds such as neopenytyl glycol diglycidyl ether, 1,6-hexanediol diglycidyl ether and hydrogenated bisphenol A diglycidyl ether; hydroxylamines selected from ethanolamine and propanolamine; polyhydric alcohols such as glycols; aminethiols such as 2-aminoethanethiol and 2-aminopropanethiol; aminosulfonic acids such as 2-amino-1-naphthalenesulfonic acid; hydroxyphosphonic acids such as α-glycerophosphonic acid; diaminoalkylsulfonic acids; and amino acids such as glycine, alanine and glutamic acid.

It is preferred that the organic silicon compound or a product formed by the reaction of the organic compound (A) and the organic compound (B) has at least one siloxane bond obtained by condensation of two or more of the functional groups (a). By forming siloxane bond(s) by condensation of two or more of the functional groups (a), the organic silicon compound or the above product comes to have a longer molecular chain and a branch, and, as a result, a coating of network structure becomes easy to form. Further, the reactivity of the silanol is lowered due to steric hindrance, etc., and the stability of the organic silicon compound or the above product in water further increases.

The organic polymer (Q) used in the invention is at least one selected from urethane resins, epoxy resins, acrylic resins, polyester resins and polyolefin resins, and it is preferred that these resins are dissolved or dispersed in water. Without any intention of limitation, as the urethane resins, there can be mentioned a product obtained by condensation polymerization of a polyol such as a polyether polyol, a polyester polyol or a polycarbonate polyol with an aliphatic polyisocyanate, an alicyclic polyisocyanate or an aromatic polyisocyanate; etc.

As the epoxy resins, there can be mentioned bisphenol-type, particularly bisphenol A-type epoxy compounds, and other glycidyl ether compounds. As the polyester resins, there can be mentioned a polyester resin which is a polycondensate of a polyol such as ethylene glycol or neopentyl glycol with a polybasic acid such as terephthalic acid or trimellitic acid; etc. As the acrylic resins, there can be mentioned homopolymers or copolymers of acrylic esters and methacrylic esters such as methyl methacrylate, butyl acrylate, 2-ethylhexyl acrylate, 2-hydroxyethyl acrylate, glycidyl methacrylate and aminoethyl methacrylate; and copolymers of an acrylic ester or methacrylic ester as mentioned above with styrene, acrylonitrile, maleic acid, acrylamide, N-methylolacrylamide, diallylamine or the like. These resins are in the form of aqueous emulsions usually obtained by emulsion polymerization using a surfactant, a reactive emulsifier or the like, and soap-free-type aqueous emulsions wherein a water soluble polymer is used as an emulsifier can also be used. As the polyolefin resin, there can be mentioned one obtained by dispersing a copolymer of ethylene with acrylic acid or methacrylic acid into water using ammonia; one obtained by compulsorily emulsifying a copolymer of ethylene with vinyl alcohol using a surfactant; etc.

As to the compounding amount of the organic polymer (Q) in Embodiment 2, the mass ratio of the compounding amount of the organic polymer (Q) to the total compounding amount (A+B) of the organic compound (A) and the organic compound (B), Q/(A+B), is preferably 0.01 to 80 and further preferably 0.1 to 50. When Q/(A+B) is less than 0.01, the effect of addition of the organic polymer is not displayed, and when Q/(A+B) is more than 80, the effect of addition is saturated and it is not economical.

It is preferred to compound a metallic compound (C) containing a bivalent or more metallic ion (when the metallic ion is a Zr ion, a Ti ion, a Hf ion or a Ce ion, the case where the metallic compound (C) is a colloidal dispersoid is excluded) into the aqueous metal surface-treating agent of the invention (Embodiment 2), and, thereby, the corrosion resistance of a metallic material treated with the aqueous metal surface-treating agent of the invention increases. It is preferred that the bivalent or more metallic ion is at least one selected from Ti, Zr, Hf, V, Mg, Mn, Zn, W, Mo, Al, Ni, Co and Ca ions. As the compound (C) containing a bivalent or more metallic ion, there can be mentioned salts of such metals with inorganic acids such as fluoro acids, phosphoric acid, nitric acid and sulfuric acid; salts of such metals with organic acids such as formic acid, acetic acid, butyric acid, oxalic acid, succinic acid, lactic acid, L-ascorbic acid, tartaric acid, citric acid, DL-malic acid, malonic acid, maleic acid and phthalic acid; complex salts of such metals such as alkoxides, alkyl acetonates, alkanediolates, lactates, aminates and stearates thereof. Particularly as V ion-containing compounds, there is no particular limitation, and there can be exemplified vanadium pentoxide V₂O₅, metavanadic acid HVO₃, ammonium metavanadate, sodium metavanadate, vanadium oxytrichloride VOCl₃, vanadium trioxide V₂O₃, vanadium dioxide VO₂, vanadium oxysulfate VOSO₄, vanadium oxyacetylacetonate VO(OC(=CH₂)CH₂COCH₃)₂, vanadium acetylacetonate V(OC(=CH₂)CH₂COCH₃)₃, vanadium trichloride (VCl₃, phosphorusvanadomolybdic acid, etc. When a pentavalent vanadium compound is used, a compound obtained by reducing the valence to tetravalent to bivalent with an organic compound having at least one functional group selected from the group consisting of hydroxyl groups, carbonyl groups, carboxyl groups, primary, secondary or tertiary amino groups, amide groups, phosphoric acid groups and phosphonic acid groups can also be used.

These metallic compounds (C) can be used alone or in a combination of two or more.

These metallic ions are considered to have an effect to increase corrosion resistance by control of the corrosion potential of the metal surface and control of oxidation reduction reaction in a corrosive environment, formation of a very thin coating on the metal surface, increase of the coating density due to crosslinking reaction with functional groups in the coating components, etc.

The compounding amount of the metallic compound (C) is preferably such a compounding amount that the mass ratio of the content of the metallic compound (C) to the content of Si derived from the functional group (a) in a coating obtained from the aqueous metal surface-treating agent, C/Si, becomes 0.01 to 10.0, and further preferably such a compounding amount that the mass ratio becomes 0.1 to 5.0. When C/Si is less than 0.01, the effect due to the compounding of the metallic compound (C) is not displayed, and thus corrosion resistance is not increased. Whereas, when C/Si is more than 10.0, the effect of compounding of the metallic compound (C) is not further increased, and the case is not economical.

It is preferred to compound at least one acid (D) selected from hydrofluoric acid, organic acids and phosphoric acid into the aqueous metal surface-treating agent of the invention (Embodiment 2), and, thereby, the corrosion resistance is increased. Hydrofluoric acid increases corrosion resistance by etching effect and further chelating action. Organic acids do not strongly etch metal surfaces because they are acids having a relatively low acidity among acids, but remove uneven very thin oxide coatings on the surface and thus increase corrosion resistance. Phosphoric acid forms phosphate conversion coatings on metal surfaces although the thickness is very thin, and increases corrosion resistance.

The compounding amount of the acid (D) is preferably such a compounding amount that the mass ratio of the content of the acid (D) to the content of Si derived from the functional group (a) in a coating obtained from the aqueous metal surface-treating agent, D/Si, becomes 0.01 to 10.0, and further preferably such a compounding amount that the mass ratio becomes 0.1 to 5.0. When D/Si is less than 0.01, the effect due to the compounding of the acid (D) is not displayed, and thus corrosion resistance is not increased. Whereas, when D/Si is more than 10.0, either etching is made excessively and corrosion resistance is lowered, or the effect of compounding of the acid (D) is not further increased and the case is not economical.

It is preferred to compound a colloidal dispersion (E) of the simple substance or a compound of at least one element selected from Si, Zr, Ti, Sn, Hf, Ce and Nb into the aqueous metal surface-treating agent of the invention (Embodiment 2). These colloidal particles have a concentration gradient in the state of distribution in the coating and are concentrated in the neighborhood of the metal surface to protect the metal surface, and thus, corrosion resistance is heightened. Furthermore, the colloidal particles increase the density of the coating and reduce the coating thickness, and, thus, electric conductivity is heightened, and further, effects of enhancement of the hardness and/or adhesion of the coating, etc. are brought about.

The compounding amount of the colloidal dispersion (E) is preferably such a compounding amount that the mass ratio of the solid content of the colloidal dispersion (E) to the content of Si derived from the functional group (a) in a coating obtained from the aqueous metal surface-treating agent, E/Si, becomes 0.01 to 10.0, and further preferably such a compounding amount that the mass ratio becomes 0.1 to 5.0. When E/Si is less than 0.01, the effect due to the compounding of the colloidal dispersion (E) is not displayed. Whereas, when E/Si is more than 10.0, the coating is embrittled, and thus, corrosion resistance and adhesion are lowered.

It is possible to compound a surfactant called a wettability-enhancing agent or a thickener in order to form an even coating on the surface to be coated, an electric conductivity-enhancing agent, a coloring pigment for enhancement of design properties, an auxiliary agent for enhancement of coating formability, etc. into the aqueous metal surface-treating agent of the invention (Embodiment 2). Further, it is also possible to compound, as an agent to give lubricity, an organic lubricant such as polyethylene wax or paraffin wax, a solid lubricant such as graphite, mica or molybdenum disulfide, etc.

It is possible to compound a compound having, in one molecule, at least one functional group selected from the group consisting of at least one unsaturated group selected from the group consisting of C=O groups, C=C groups, C=C groups, C=N groups, C=N groups and N=N groups; N-N groups; and S element-containing functional groups, such a compound being called an organic inhibitor, into the aqueous metal surface-treating agent of the invention (Embodiment 2), in order to further enhance corrosion resistance. As compounds having such a functional group, there can be mentioned, without limitative intention, C=O group-containing compounds including aldehydes such as formaldehyde and acetaldehyde, ketones such as acetone and methyl ethyl ketone, etc.; C=C group-containing compounds such as benzene and its derivatives, naphthalene and its derivatives, acrylic acid and methacrylic acid and their derivatives, alkyl carboxylates and alkylaldehydes; C=C group-containing compounds such as acetylene alcohol and acetylene derivatives; C=N group-containing compounds such as azines, triazines, osazone dyes, triphenylmethane dyes, chnidin, pyrimidine, pyrazole, imidazole, pyridinium compounds and quinolinium compounds; C=N group-containing compounds such as ethylene cyanohydrin; N-N group-containing compounds such as hydrazine compounds and their derivatives; N=N group-containing compounds such as azo dyes; S element-containing compounds such as sulfonic acids, sulfonates, sulfamides, thiourea and cyclic thiourea; etc.

The aqueous metal surface-treating agent of the invention (Embodiment 2) is applied onto the surface of a metallic material and dried with heating to form a coating on the surface of the metallic material. The amount of the coating on the surface of the metallic material is preferably 10 to 3,000 mg/m² in terms of SiO₂.

There is no particular limitation as to metallic materials to which the process of the invention is applied, but zinc-containing metal-plated steel sheets, aluminum sheets and stainless steel sheets are preferred. The surfaces of these metallic materials may previously be subjected to a pretreatment such as phosphate treatment, chromate treatment or the like. There is no particular limitation as to a method to apply the aqueous metal surface-treating agent of the invention onto the surface of a metallic material, and a method such as an immersing method, a spraying method or a roll coating method can be used. There is no particular limitation either as to treatment (coating) temperature and treatment (coating) time, but, generally, treatment (coating) temperature is preferably 10 to 40°C and treatment (coating) time is preferably 0.1 to 10 seconds.

By evaporating the solvent, namely water or the alcohol from the layer of the treating liquid formed on the surface of the metallic material, a coating is formed. For industrially practical formation of a coating, it is preferred to heat drying the layer of the treating liquid. In the occasion, drying temperature is preferably 30 to 300°C, further preferably 40 to 250°C and still further preferably 60 to 200°C, as a peak metal temperature, and drying time is not particularly limited so long as the above condition of the peak metal temperature is met.

When the surface-treating agent of the invention is used, a novel coating having together not only excellent corrosion resistance and adhesion, but also acid resistance and alkali resistance, can be formed on the surface of a metallic material. The reasons are surmised as follows. A coating formed using the surface-treating agent of the invention comprises mainly the organic silicon compound and the organic polymer. First, corrosion resistance and adhesion are surmised to be displayed by remarkable barrier effect brought about by that when part of the organic silicon compound is concentrated by drying, etc., the molecules themselves of organic silicon compound mutually react to form a continuous coating, and groups formed by hydrolysis of part of the -OR groups of the organic silicon compound form Si-O-M bonds (M: metallic element(s) with the metal surface.

Further, it is surmised that, in a coating formed using the surface-treating agent of the invention, unreacted silanol parts react with the organic polymer so as to bury the void of the coating having silicon as a base, and thus, the coating has a very dense structure. It is surmised that by mechanisms as mentioned above, it becomes possible to form a novel coating having together not only excellent corrosion resistance and adhesion, but also acid resistance and alkali resistance.

### Examples

The invention is specifically described below according to examples and comparative examples of the invention, but the invention is not limited thereby. Preparation of test sheets, examples and comparative examples, and processes of application of surface-treating agents for metallic materials are described below.

### Preparation of test sheets

### (1) Materials for tests

The following materials on the market were used.
- Electrogalvanized steel sheet (EG): sheet thickness = 0.8 mm, galvanization amount = 20/20 (g/m²)
- 5% aluminum-containing hot-dip zinc-plated steel sheet (GF): sheet thickness = 0.8 mm, plating amount = 90/90 (g/m²)
- Zinc-nickel alloy-plated steel sheet (Zn/Ni): sheet thickness = 0.8 mm, plating amount = 20/20 (g/m²)
- Hot-dip zinc-plated steel sheet (GI): sheet thickness = 0.8 mm, plating amount = 90/90 (g/m²)
- Hot-dip 55% zinc alloy-plated steel sheet (GL): sheet thickness = 0.8 mm, plating amount = 90/90 (g/m²)
- Alloyed (Zn-Fe) hot-dip zinc-plated steel sheet (GA): sheet thickness = 0.8 mm, plating amount = 60/60 (g/m²)
- A-1100 aluminum sheet (AL): sheet thickness = 0.8 mm

### (2) Degreasing treatment

A material was spray treated for 2 minutes using a silicate alkaline degreasing agent, Fine Cleaner 4336 (registered trade mark: made by Nihon Parkerizing Co., Ltd.) under the condition of concentration 20 g/L and temperature 60°C, washed with pure water for 30 seconds and dried, and the resulting material was used as a test sheet.

### Embodiment 1 (for reference only and not in accordance with the present invention)

### Preparation of aqueous metal surface-treating agents, application of the agents onto test sheets and drying thereof (examples), and preparation of aqueous metal surface-treating agents for comparison, application of the agents onto test sheets and drying thereof(comparative examples)

### <Composition P1>

Two mols of trimethoxychlorosilane and lmol of trimethylolpropane were reacted in ethanol, the resulting product solution was mixed with pure water and the mixture was adjusted so that the solid content became 10 %. As to the product, the number of the functional groups (a) is 2, and the molecular weight per one functional group (b) is about 530.

### <Composition P2>

Two mols of vinyltrimethoxysilane and 1mol of sulfoethyl acrylate were reacted in ethanol, the resulting product solution was mixed with pure water and the mixture was adjusted so that the solid content became 10 %. As to the product, the number of the functional groups (a) is 2, and the molecular weight per one functional group (b) is about 320.

### <Composition P3>

Two mols of 3-glycidoxypropyltrimethoxysilane and lmol of 3-aminopropyltriethoxysilane were reacted in ethanol, the resulting product solution was mixed with pure water and the mixture was adjusted so that the solid content became 10 %. As to the product, the number of the functional groups (a) is 3, and the molecular weight per one functional group (b) is 700.

### <Composition P4>

Two mols of N-(aminoethyl)-3-aminopropyltrimethoxysilane and 1mol of 3-isocyanatopropyltrimethoxysilane were reacted in ethanol, the resulting product solution was mixed with pure water and the mixture was adjusted so that the solid content became 10 %. As to the product, the number of the functional groups (a) is 2, and the molecular weight per one functional group (b) is about 800.

### <Composition P5>

Four mols of 3-mercaptopropyltrimethoxysilane, 4 mols of 2-(3,4-epoxycyclohexyl)ethyltrimethoxysilane and 1mol of dimethylolpropionic acid were reacted in ethanol, the resulting product solution was mixed with pure water and the mixture was adjusted so that the solid content became 10 %. As to the product, the number of the functional groups (a) is 4, and the molecular weight per one functional group (b) is about 1,900.

### <Composition P6>

Four mols of 3-glycidoxypropyltrimethoxysilane and 1mol of ethylenediamine were reacted in ethanol, the resulting product solution was mixed with pure water and the mixture was adjusted so that the solid content became 10 %. As to the product, the number of the functional groups (a) is 4, and the molecular weight per one functional group (b) is about 500.

### <Composition P7>

Three mols of 3-aminopropyltriethoxysilane and 1mol of trimethylolpropane polyglycidyl ether were reacted in ethanol, the resulting product solution was mixed with pure water and the mixture was adjusted so that the solid content became 10 %. As to the product, the number of the functional groups (a) is 3, and the molecular weight per one functional group (b) is 300.

### <Composition P8>

Seven mols of 3-mercaptopropyltrimethoxysilane, 1mol of pentaerythritol polyglycidyl ether and 1mol of 2-aminopropanethiol were reacted in ethanol, the resulting product solution was mixed with pure water and the mixture was adjusted so that the solid content became 10 %. As to the product, the number of the functional groups (a) is 7, and the molecular weight per one functional group (b) is 1,500.

### <Q1: Urethane resin>

Polyether polyol (synthetic components: tetramethylene glycol and ethylene glycol, molecular weight 1,500) (150 parts by mass), 6 parts by mass of trimethylolpropane, 24 parts by mass of N-methyl-N,N-diethanolamine, 94 parts by mass of isophorone diisocyanate and 135 parts by mass of methyl ethyl ketone were put in a reaction vessel, and reacted for 1 hour while the temperature is maintained at 70 to 75°C to form an urethane prepolymer. Then, 15 parts by mass of dimethyl sulfate was put in the reaction vessel, and the mixture was subjected to reaction at 50 to 60°C for 30 to 60 minutes to form a cationic urethane prepolymer. Then, 576 parts by mass of water was put in the reaction vessel, the mixture was uniformly emulsified, and methyl ethyl ketone was recovered to obtain a cationic urethane resin.

### <Q2: Epoxy resin>

Two mols of polypropylene oxide adduct of bisphenol A (180 parts by mass) was put in a reaction vessel and heated under stirring. 0.9 part by mass of boron trifluoride diethyl ether complex was added as a catalyst, and then, 27 part by mass of 2-ethylhexyl monoglycidyl ether (epoxy equivalent 198) was added dropwise at 60 to 70°C over a period of 1 hour, and the mixture was aged as such for 1.5 hours to progress addition reaction. After confirming the disappearance of the oxirane rings in the system by the amount of hydrochloric acid absorption, boron trifluoride diethyl ether complex was inactivated with 3 parts by mass of 48 % by mass sodium hydroxide. Hydroxyl groups formed were dehydrated under reflux while 370 parts by mass of epichlorohydrin and 1.4 parts by mass of tetramethylammonium chloride were added, the epichlorohydrin was refluxed at 50 to 60°C under reduced pressure and 109 parts by mass of 48 % by mass of sodium hydroxide was added dropwise. After the dropwise addition, the mixture was reflux dehydrated for 3 hours to progress dehydration reaction. Sodium chloride formed was removed by filtration. Excess epichlorohydrin was distilled off under reduced pressure. The resulting resin has an epoxy equivalent of 283, a viscosity of 1725 mPa.s (25°C) and a total chlorine content of 0.4 % by mass. 300 parts by mass of the epoxy resin was mixed with 700 parts by mass of water, 3.0 parts by mass of a polyoxyethylene emulsifier was added, and the mixture was compulsorily emulsified by a stirrer.

### <Q3: Acrylic resin>

Styrene (25 parts by mass), 25 parts by mass of butyl acrylate, 20 parts by mass of acrylonitrile, 15 parts by mass of acrylic acid, 10 parts by mass of hydroxyethyl acrylate and 5 parts by mass of N-methylolacrylamide were copolymerized in a reaction vessel, and then, 300 parts by mass of the resulting acrylic resin, 700 parts by mass of water and 0.5 part by mass of a polyoxyethylene emulsifier were mixed and compulsorily emulsified by a stirrer.

### < Q4: Phenol resin >

Phenol (1 mol) and 0.3 g of p-toluenesulfonic acid as a catalyst were put in a 1,000 ml-flask equipped with a reflux condenser, the inside temperature was raised to 100°C, 0.85 mol of an aqueous formaldehyde solution was added dropwise over a period of 1 hour, and the mixture was subjected to reaction at 100°C for 2 hours under reflux. Then, the reaction vessel was cooled with water and allowed to stand; after the turbidity of an aqueous layer separating as the upper layer disappeared, the aqueous layer was removed by decantation; and the remaining layer was heated up to 170 to 175°C under stirring to remove unreacted components and water. Then, the temperature was lowered to 100°C, 234 g of butyl cellosolve was added to dissolve the resulting polycondensate completely; 234 g of pure water was added; at the time when the temperature inside the system was lowered to 50°C, 1 mol of diethanolamine was added; and then, 1 mol of an aqueous formaldehyde solution was added dropwise at 50°C over a period of about 1 hour. Then, the temperature of the mixture was raised up to 80°C, and reaction was continued for about 3 hours under stirring to obtain a cationic phenolic polycondensate.

### < Q5: Polyester resin >

Ethylene glycol (58.9 parts by mass), 6.8 parts by mass of trimethylolpropane, 34.4 parts by mass of 1,4-cyclohexanedicarboxylic acid, 56.4 parts by mass of terephthalic acid, 66.4 parts by mass of isophthalic acid and a polymerization catalyst were put in a reaction vessel; and heated under stirring to conduct esterification reaction while water formed is removed, whereby a polyester resin having a number average molecular weight of 3,000, a Tg of 40°C, a hydroxyl value of 50 mg KOH/g or less and an acid value of 0.5 mg KOH/g or less was obtained. The polyester resin was diluted with cyclohexane to prepare a polyester resin solution of a solid content of 60 %, and the solution was added to water under strong stirring at a proportion of 100 parts by mass of the polyester resin to 900 parts by mass of water to obtain a compulsorily emulsified aqueous polyester resin dispersion.

### < Q6: Polyolefin resin >

An ethylene-acrylic acid copolymer (112 g), 11.3 g of 28 % ammonia water (corresponding to 60 % neutralization) and 276.7 g of water as an aqueous dispersion medium were put in a reaction vessel, and heated under stirring to raise the temperature. After the temperature inside the reaction vessel was raised to 95°C, stirring was continued at that temperature for 4 hours, and the contents were cooled to room temperature under continued stirring to obtain an aqueous dispersion of a neutralized ethylene-acrylic acid copolymer.

### Metallic compound (C)

C1: Hexafluorotitanic acid
C2: Titanium alkoxide
C3: Hexafluorozirconic acid
C4: Ammonium zirconyl carbonate
C5: Hexafluorohafnic acid
C6: Vanadyl acetylacetonate
C7: Magnesium hydrogenphosphate
C8: Zinc acetylacetonate
C9: Ammonium metatungstate
C10: Ammonium molybdate
C11: Aluminum hydrogenphosphate
C12: Nickel nitrate
C13: Cobalt nitrate
C14: Cerium nitrate
C15: Calcium hydrogenphosphate

One of the resins Q1 to Q6, one of the metallic compounds C1 to C15, an acid (D) and a colloidal dispersion (E) shown in Tables 1 to 3 were appropriately compounded into one of the compositions P1 to P8 to prepare an aqueous metal surface-treating agent as an example of Embodiment 1 shown in Tables 1 to 3. The treating agent was adjusted to a solid concentration of 10 % with water, bar coater applied onto the surface of a test sheet as shown in Tables 1 to 3 so that the resulting dry coating amount could be 700 mg/m², and dried so that the peak metal temperature could be 80°C to form a coating.

### Comparative example 1

A reactive chromate treatment was made onto a test sheet shown in Tables 4 to 10, and the resulting sheet was immersed in a comparative treating solution obtained by dissolving γ-glycidoxypropyltrimethoxysilane and methanol in deionized water so that the respective concentrations could be 12.0 % by mass and 10.0 % by mass, and, after draining by a wringer roll, dried so that the peak metal temperature could be 80°C to form a coating.

### Comparative example 2

A comparative treating solution obtained by dissolving γ-glycidoxypropyltrimethoxysilane and methanol in deionized water so that the respective concentrations could be 5.0 % by mass and 10 % by mass, was applied onto the surface of a test sheet using a No. 3 bar coater, and dried so that the peak metal temperature could be 80°C to form a coating.

### Comparative example 3

A comparative treating solution obtained by dissolving ammonium zirconium carbonate, ammonium phosphate and vanadyl acetylacetonate in water so that the respective concentrations could be 2.0 g/L, 2.0 g/L and 0.5 g/L was applied onto the surface of a test sheet using a No. 3 bar coater, and dried so that the peak metal temperature could be 80°C to form a coating.

### Comparative example 4

A comparative treating solution obtained by dispersing an ionomer resin, a water soluble multifunctional epoxy group-containing compound and an ammonium ion-adsorbing silica in water so that the respective concentrations could be 4.0 g/L, 0.5 g/L and 0.5 g/L was applied onto the surface of a test sheet using a No. 3 bar coater, and dried so that the peak metal temperature could be 80°C to form a coating.

### Embodiment 2

### Preparation of aqueous metal surface-treating agents, application of the agents onto test sheets and drying thereof (examples), and preparation of aqueous metal surface-treating agents for comparison, application of the agents onto test sheets and drying thereof (comparative examples)

### Organic compound (A)

A1: 3-Glycidoxypropyltrimethoxysilane
A2: 3-Aminopropyltrimethoxysilane
A3: 3 -Mercaptopropyltrimethoxysilane
A4: 3-Isocyanatopropyltrimethoxysilane
A5: Pentaerythritol polyglycidyl ether
A6: Diphenylmethane diisocyanate
A7: Melamine
A8: Dimethylolpropionic acid
A9: N,N-Diisopropylcarbodiimide
Organic compound (B)
B1: N-(aminoethyl)-3-aminopropyltrimethoxysilane
B2: Diphenylmethanediamine
B3: Neopentyl glycol polyglycidyl ether polyoxyethylene adduct
B4: Glycerol
B5: Diaminoalkylsulfonic acid
B6: α-glycerophosphoric acid
Organic polymer (Q)

The same as mentioned in Embodiment 1

### Metallic compound (C)

The same as mentioned in Embodiment 1

An above organic compound (A), an above organic compound (B), an above organic polymer (Q), an above metallic compound (C), and an acid (D) and a colloidal dispersion (E) shown in Table 11 were appropriately compounded into water to prepare an aqueous metal surface-treating agent as an example of Embodiment 2 shown in Table 11. The treating agent was adjusted to a solid concentration of 10 % with water, bar coater applied onto the surface of a test sheet as shown in Tables 12 to 18 so that the resulting dry coating amount could be 700 mg/m², and dried so that the peak metal temperature could be 80°C to form a coating.

### Comparative example 1

A reactive chromate treatment was made onto a test sheet, and the resulting sheet was immersed in a comparative treating solution obtained by dissolving γ-glycidoxypropyltrimethoxysilane and methanol in deionized water so that the respective concentrations could be 12.0 % by mass and 10.0 % by mass, and, after draining by a wringer roll, dried so that the peak metal temperature could be 80°C to form a coating.

### Comparative example 2

A comparative treating solution obtained by dissolving γ-glycidoxypropyltrimethoxysilane and methanol in deionized water so that the respective concentrations could be 5.0 % by mass and 10 % by mass, was applied onto the surface of a test sheet using a No. 3 bar coater, and dried so that the peak metal temperature could be 80°C to form a coating.

### Comparative example 3

A comparative treating solution obtained by dissolving ammonium zirconium carbonate, ammonium phosphate and vanadyl acetylacetonate in water so that the respective concentrations could be 2.0 g/L, 2.0 g/L and 0.5 g/L was applied onto the surface of a test sheet using a No. 3 bar coater, and dried so that the peak metal temperature could be 80°C to form a coating.

### Comparative example 4

A comparative treating solution obtained by dispersing an ionomer resin, a water soluble multifunctional epoxy group-containing compound and an ammonium ion-adsorbing silica in water so that the respective concentrations could be 4.0 g/L, 0.5 g/L and 0.5 g/L was applied onto the surface of a test sheet using a No. 3 bar coater, and dried so that the peak metal temperature could be 80°C to form a coating.

### Comparative example 5

A comparative treating solution obtained by dissolving a cationic urethane resin, hexafluorozirconic acid and 3-glycidyloxypropyltriethoxysilane in water so that the respective concentrations could be 8.0 g/L, 0.5 g/L and 1.0 g/L was applied onto the surface of a test sheet using a No. 3 bar coater, and dried so that the peak metal temperature could be 80°C to form a coating.

### Evaluation tests (Common to Embodiment 1 and Embodiment 2)

### (1) Corrosion resistance at the plane part

A salt spray test according to JIS-Z-2371 was made for 120 hours, and thereby, the state of incidence of white rust was observed.

### <Evaluation criterion>

⊚ = The proportion of incidence of white rust is less than 3 % of the whole area
○ = The proportion of incidence of white rust is 3 % or more but less than 10 % of the whole area
Δ = The proportion of incidence of white rust is 10 % or more but less than 30 % of the whole area
× = The proportion of incidence of white rust is 30 % or more of the whole area

### (2) Corrosion resistance at the wrought part

An Erichsen test (extrusion: 7 mm) was made, and, then, a salt spray test according to JIS-Z-2371 was made for 72 hours, and thereby, the state of incidence of white rust was observed.

### <Evaluation criterion>

⊚ = The proportion of incidence of white rust is less than 10 % of the whole area
○ = The proportion of incidence of white rust is 10 % or more but less than 20 % of the whole area
Δ = The proportion of incidence of white rust is 20 % or more but less than 30 % of the whole area
× = The proportion of incidence of white rust is 30 % or more of the whole area

### (3) Acid resistance

A surface-treated test sheet was immersed in 0.5 N aqueous hydrochloric acid solution at 25°C for 20 minutes, and then, a salt spray test according to JIS-Z-2371 (corrosion resistance test at the plane part) was made for 48 hours, and thereby, the state of incidence of white rust was observed.

### <Evaluation criterion>

⊚ = The proportion of incidence of white rust is less than 3 % of the whole area
○ = The proportion of incidence of white rust is 3 % or more but less than 10 % of the whole area
Δ = The proportion of incidence of white rust is 10 % or more but less than 30 % of the whole area
× = The proportion of incidence of white rust is 30 % or more of the whole area

### (4) Alkali resistance

A surface-treated test sheet was immersed in 0.5 N aqueous sodium hydroxide solution at 60°C for 20 minutes, and then, a salt spray test according to JIS-Z-2371 (corrosion resistance test at the plane part) was made for 48 hours, and thereby, the state of incidence of white rust was observed.

### <Evaluation criterion>

⊚ = The proportion of incidence of white rust is less than 3 % of the whole area
○ = The proportion of incidence of white rust is 3 % or more but less than 10 % of the whole area
Δ = The proportion of incidence of white rust is 10 % or more but less than 30 % of the whole area
× = The proportion of incidence of white rust is 30 % or more of the whole area

### (5) Stability

A treating agent was allowed to stand in a constant temperature chamber of 40°C, and the stability of the agent was evaluated by days which elapsed until the agent gels.

### <Evaluation criterion>

⊚ = There is no gelation
○ = Gelation days are 90 days or more but less than 120 days
Δ = Gelation days are 60 days or more but less than 90 days
× = Gelation days are less than 60 days

### Results of the evaluation tests

The results of the tests as to Embodiment 1 are shown in Tables 4 to 10. It is seen that the treating agents of Examples 1 to 56 in Tables 1 to 3 give corrosion resistance equal to that of the chromate, acid resistance and alkali resistance together, and are extremely stable.

The results of the tests as to Embodiment 2 are shown in Tables 12 to 18. It is seen that the treating agents of Examples 1 to 15 in Table 11 give corrosion resistance equal to that of the chromate, acid resistance and alkali resistance together, and are extremely stable.

**Table 1 Examples of Embodiment 1**

| | Test sheet | composition | Organic polymer Q | | Metallic compound C | | Acid D | | Colloidal dispersion E | |
|---|---|---|---|---|---|---|---|---|---|---|
| | | | | Q/P | | C/Si | | D/Si | | E/Si |
| No.1 | EG | P1 | Q1 | 1 | C1 | 0.01 | Hydrofluoric acid | 1.0 | SiO₂ | 5 |
| No.2 | | P2 | Q1 | 33 | C2 | 2.4 | Phosphoric acid | 3.5 | ZrO₂ | 3.5 |
| No.3 | | P3 | Q1 | 67 | C3 | 0.07 | Phosphoric acid | 0.3 | - | - |
| No.4 | | P4 | Q1 | 0.5 | C4 | 0.03 | Phosphoric acid | 4.2 | TiO₂ | 2 |
| No.5 | | P5 | Q1 | 20 | C5 | 3.1 | Ascorbic acid | 9.4 | Sn | 2 |
| No.6 | | P6 | Q2 | 60 | C6 | 0.1 | Hydrofluoric acid | 2.4 | - | - |
| No.7 | | P7 | Q2 | 80 | C7 | 1.2 | Hydrofluoric acid | 3.2 | - | - |
| No.8 | | P8 | Q2 | 10 | C8 | 0.3 | Citric acid | 0.5 | Hf | 2.5 |
| No.9 | GF | P1 | Q2 | 0.5 | C9 | 0.15 | Phosphoric acid | 0.0 | Ce | 2 |
| No.10 | | P2 | Q2 | 5 | C10 | 2.2 | Hydrofluoric acid | 3.4 | - | - |
| No.11 | | P3 | Q3 | 10 | C11 | 3.4 | Phosphoric acid | 5.4 | - | - |
| No.12 | | P4 | Q3 | 30 | C12 | 8.4 | Hydrofluoric acid | 6.1 | - | - |
| No.13 | | P5 | Q3 | 50 | C13 | 2.6 | Tartaric acid | 3.8 | - | - |
| No.14 | | P6 | Q3 | 20 | C14 | 0.1 | Phosphoric acid | 2.1 | - | - |
| No.15 | | P7 | Q3 | 25 | C15 | 3.6 | Hydrofluoric acid | 6.1 | Nb | 1 |
| No.16 | | P8 | Q3 | 20 | C1 | 2.8 | Malonic acid | 1.0 | SiO₂ | 3.5 |
| No.17 | ZN | P1 | Q4 | 0.02 | C2 | 6.4 | Phosphoric acid | 4.8 | ZrO₂ | 5 |
| No.18 | | P2 | Q4 | 0.05 | C3 | 6.4 | Phosphoric acid | 2.4 | TiO₂ | 5 |
| No.19 | | P3 | Q4 | 0.1 | C4 | 3.2 | - | - | - | - |
| No.20 | | P4 | Q4 | 0.8 | C5 | 2.7 | Hydrofluoric acid | 1.1 | Sn | 2.5 |
| No.21 | | P5 | Q4 | 1.5 | C6 | 9.4 | Butyric acid | 5.9 | Hf | 3 |
| No.22 | | P6 | Q5 | 3.3 | C7 | 2.4 | Hydrofluoric acid | 3.4 | Ce | 0.1 |
| No.23 | | P7 | Q5 | 5 10 | C8 | 3.1 | Hydrofluoric acid | 2.2 | Nb | 0.5 |
| No.24 | | P8 | Q5 | | C9 | 2.8 | Phosphoric acid | 8.4 | - | - |

**Table 2 Examples of Embodiment 1**

| | Test sheet | Composition | Organic polymer Q | | Metallic compound C | | Acid D | | Colloidal dispersion E | |
|---|---|---|---|---|---|---|---|---|---|---|
| | | | | Q/P | | C/Si | | D/S i | | E/Si |
| No.25 | GI | P1 | Q5 | 50 | C10 | 5.4 | Succinic acid | 6.1 | SiO₂ | 2 |
| No.26 | | P2 | Q5 | 12.5 | C11 | 2.4 | Hydrofluoric acid | 3.1 | ZrO₂ | 2.5 |
| No.27 | | P3 | Q5 | 30 | - | - | - | - | - | - |
| No.28 | | P4 | Q6 | 37.5 | C13 | 0.05 | Phosphoric acid | 2.1 | TiO₂ | 3 |
| No.29 | | P5 | Q6 | 50 | C14 | 0.04 | Lactic acid | 5.8 | Sn | 3 |
| No.30 | | P6 | Q6 | 80 | C15 | 2.4 | Hydrofluoric acid | 4.8 | Hf | 3.5 |
| No.31 | | P7 | Q6 | 20 | C1 | 0.5 | Hydrofluoric acid | 3.4 | Ce | 3 |
| No.32 | | P8 | Q6 | 15 | C2 | 9.1 | Phthalic acid | 2.0 | - | - |
| No.33 | GL | P1 | Q6 | 30 | C3 | 2.4 | Phosphoric acid | 0.4 | - | - |
| No.34 | | P2 | Q1 | 3 | C4 | 8.7 | Hydrofluoric acid | 0.05 | - | - |
| No.35 | | P3 | Q1 | 8 | C5 | 3.6 | Hydrofluoric acid | 3.0 | - | - |
| No.36 | | P4 | Q1 | 15 | C6 | 0.1 | Hydrofluoric acid | 2.4 | - | - |
| No.37 | | P5 | Q1 | 25 | C7 | 0.05 | Hydrofluoric acid | 6.4 | Nb | 1 |
| No.38 | | P6 | Q1 | 45 | C8 | 3.4 | Hydrofluoric acid | 3.2 | SiO₂ | 1 |
| No.39 | | P7 | Q2 | 30 | C9 | 0.8 | Phosphoric acid | 8.7 | ZrO₂ | 2.5 |
| No.40 | | P8 | Q2 | 21 | C10 | 3.4 | Lactic acid | 9.4 | TiO₂ | 2.5 |

**Table 3 Examples of Embodiment 1**

| | Test sheet | Composition | Organic polymer Q | | Metallic compound C | | Acid D | | Colloidal dispersion E | |
|---|---|---|---|---|---|---|---|---|---|---|
| | | | | Q/P | | C/Si | | D/S i | | E/Si |
| No.41 | GA | P1 | Q2 | 80 | C11 | 4.8 | Phosphoric acid | 10 | Sn | 3.5 |
| No.42 | | P2 | Q2 | 30 | C12 | 3.9 | Phosphoric acid | 3.1 | Hf | 3.5 |
| No.43 | | P3 | Q2 | 21 | C13 | 5.7 | Phosphoric acid | 2.8 | Ce | 2 |
| No.44 | | P4 | Q3 | 45 | - | - | - | - | - | - |
| No.45 | | P5 | Q3 | 30 | C15 | 3.4 | Phthalic acid | 4.4 | Nb | 2 |
| No.46 | | P6 | Q3 | 0.5 | C1 | 2.8 | Hydrofluoric acid | 6.1 | SiO₂ | 2.5 |
| No.47 | | P7 | Q3 | 1 | C2 | 5.4 | Hydrofluoric acid | 3.7 | ZrO₂ | 2.5 |
| No.48 | | P8 | Q3 | 2.5 | C3 | 2 | Phosphoric acid | 9.4 | - | - |
| No.49 | AL | P1 | Q3 | 15 | C4 | 4.8 | Phosphoric acid | 3.1 | TiO₂ | 2 |
| No.50 | | P2 | Q4 | 3 | C5 | 3.6 | Phosphoric acid | 5.4 | - | - |
| No.51 | | P3 | Q4 | 5 | C6 | 2.2 | Hydrofluoric acid | 9.7 | Sn | 3.5 |
| No.52 | | P4 | Q4 | 0.5 | C7 | 7.8 | Hydrofluoric acid | 6.1 | Hf | 3.5 |
| No.53 | | P5 | Q4 | 0.02 | C8 | 8.1 | Tartaric acid | 5.8 | - | - |
| No.54 | | P6 | Q4 | 3 | C9 | 2.4 | Phosphoric acid | 4.4 | Ce | 4.5 |
| No.55 | | P7 | Q4 | 2 | C10 | 3.4 | Phosphoric acid | 6.7 | Nb | 5 |
| No.56 | | P8 | Q4 | 10 | - | - | - | - | - | - |

**Table 4 Evaluation of examples and comparative examples of Embodiment 1**

| EG | | Corrosion resistance | | Acid resistance | Alkali resistance | Stability |
|---|---|---|---|---|---|---|
| | | Plane part | Wrought part | | | |
| Example | No.1 | ⊚ | ⊚ | ⊚ | ⊚ | ⊚ |
| | No.2 | ⊚ | ⊚ | ⊚ | ⊚ | ⊚ |
| | No.3 | ⊚ | ⊚ | ⊚ | ⊚ | ⊚ |
| | No.4 | ⊚ | ⊚ | ⊚ | ⊚ | ⊚ |
| | No.5 | ⊚ | ⊚ | ⊚ | ⊚ | ⊚ |
| | No.6 | ○ | ○ | ⊚ | ⊚ | ⊚ |
| | No.7 | ○ | ○ | ⊚ | ⊚ | ⊚ |
| | No.8 | ○ | ○ | ⊚ | ⊚ | ⊚ |
| Comparative example 1 | | ○ | ○ | ⊚ | ⊚ | Δ |
| Comparative example 2 | | Δ | × | × | Δ | × |
| Comparative example 3 | | Δ | × | ○ | ○ | ○ |
| Comparative example 4 | | ○ | Δ | ○ | × | ○ |
| Comparative example 5 | | ⊚ | ⊚ | × | ⊚ | ○ |

**Table 5 Evaluation of examples and comparative examples of Embodiment 1**

| GF | | Corrosion resistance | | Acid resistance | Alkali resistance | Stability |
|---|---|---|---|---|---|---|
| | | Plane part | Wrought part | | | |
| Example | No.9 | ○ | ○ | ⊚ | ⊚ | ⊚ |
| | No.10 | ○ | ○ | ⊚ | ⊚ | ⊚ |
| | No.11 | ○ | ○ | ○ | ○ | ⊚ |
| | Nο.12 | ○ | ○ | ○ | ○ | ⊚ |
| | No.13 | ○ | ○ | ○ | ○ | ⊚ |
| | Nο.14 | ○ | ○ | ○ | ○ | ⊚ |
| | No.15 | ○ | ○ | ○ | ○ | ⊚ |
| | No.16 | ○ | ○ | ○ | ○ | ⊚ |
| Comparative example 1 | | ○ | ○ | ⊚ | ⊚ | Δ |
| Comparative example 2 | | ○ | ○ | × | Δ | × |
| Comparative example 3 | | ⊚ | ○ | ○ | ○ | ○ |
| Comparative example 4 | | ○ | Δ | ○ | × | ○ |
| Comparative example 5 | | ○ | ○ | × | ⊚ | ○ |

**Table 6 Evaluation of examples and comparative examples of Embodiment 1**

| ZN | | Corrosion resistance | | Acid resistance | Alkali resistance | Stability |
|---|---|---|---|---|---|---|
| | | Plane part | Wrought part | | | |
| Example | No.17 | ⊚ | ⊚ | ⊚ | ○ | ⊚ |
| | No.18 | ⊚ | ⊚ | ⊚ | ○ | ⊚ |
| | No.19 | ⊚ | ⊚ | ⊚ | ○ | ⊚ |
| | No.20 | ⊚ | ⊚ | ⊚ | ○ | ⊚ |
| | No.21 | ⊚ | ⊚ | ⊚ | ○ | ⊚ |
| | No.22 | ○ | ○ | ⊚ | ○ | ⊚ |
| | No.23 | ○ | ○ | ⊚ | ○ | ⊚ |
| | No.24 | ○ | ○ | ⊚ | ○ | ⊚ |
| Comparative example 1 | | ○ | ○ | ⊚ | ⊚ | Δ |
| Comparative example 2 | | ○ | Δ | × | Δ | × |
| Comparative example 3 | | ○ | Δ | ○ | ○ | ○ |
| Comparative example 4 | | ○ | Δ | ○ | × | ○ |
| Comparative example 5 | | ○ | ⊚ | × | ⊚ | ○ |

**Table 7 Evaluation of examples and comparative examples of Embodiment 1**

| GI | | Corrosion resistance | | Acid resistance | Alkali resistance | Stability |
|---|---|---|---|---|---|---|
| | | Plane part | Wrought part | | | |
| Example | No.25 | ○ | ○ | ⊚ | ○ | ⊚ |
| | No.26 | ○ | ○ | ⊚ | ○ | ⊚ |
| | No.27 | ○ | ○ | ⊚ | ○ | ⊚ |
| | No.28 | ○ | ⊚ | ○ | ○ | ⊚ |
| | No.29 | ○ | ⊚ | ○ | ○ | ⊚ |
| | No.30 | ○ | ⊚ | ○ | ○ | ⊚ |
| | No.31 | ○ | ⊚ | ○ | ○ | ⊚ |
| | No.32 | ○ | ⊚ | ○ | ○ | ⊚ |
| Comparative example 1 | | ○ | ○ | ⊚ | ⊚ | Δ |
| Comparative example 2 | | ○ | Δ | × | Δ | × |
| Comparative example 3 | | ○ | Δ | ○ | ○ | ○ |
| Comparative example 4 | | ○ | Δ | ○ | × | ○ |
| Comparative example 5 | | ⊚ | ⊚ | × | ⊚ | ○ |

**Table 8 Evaluation of examples and comparative examples of Embodiment 1**

| EG | | Corrosion resistance | | Acid resistance | Alkali resistance | Stability |
|---|---|---|---|---|---|---|
| | | Plane part | Wrought part | | | |
| Example | No.33 | ○ | ⊚ | ○ | ○ | ⊚ |
| | No.34 | ⊚ | ⊚ | ⊚ | ⊚ | ⊚ |
| | No.35 | ⊚ | ⊚ | ⊚ | ⊚ | ⊚ |
| | No.36 | ⊚ | ⊚ | ⊚ | ⊚ | ⊚ |
| | No.37 | ⊚ | ⊚ | ⊚ | ⊚ | ⊚ |
| | No.38 | ⊚ | ⊚ | ⊚ | ⊚ | ⊚ |
| | No.39 | ○ | ○ | ⊚ | ⊚ | ⊚ |
| | No.40 | ○ | ○ | ⊚ | ⊚ | ⊚ |
| Comparative example 1 | | ○ | ○ | ⊚ | ⊚ | Δ |
| Comparative example 2 | | Δ | Δ | × | Δ | × |
| Comparative example 3 | | Δ | Δ | ○ | ○ | ○ |
| Comparative example 4 | | ○ | Δ | ○ | × | ○ |
| Comparative example 5 | | ⊚ | ○ | × | ○ | ○ |

**Table 9 Evaluation of examples and comparative examples of Embodiment 1**

| GF | | Corrosion resistance | | Acid resistance | Alkali resistance | Stability |
|---|---|---|---|---|---|---|
| | | Plane part | Wrought part | | | |
| Example | No.41 | ○ | ○ | ⊚ | ⊚ | ⊚ |
| | No.42 | ○ | ○ | ⊚ | ⊚ | ⊚ |
| | No.43 | ○ | ○ | ⊚ | ⊚ | ⊚ |
| | No.44 | ○ | ○ | ○ | ○ | ⊚ |
| | No.45 | ○ | ○ | ○ | ○ | ⊚ |
| | No.46 | ○ | ○ | ○ | ○ | ⊚ |
| | No.47 | ○ | ○ | ○ | ○ | ⊚ |
| | No.48 | ○ | ○ | ○ | ○ | |
| Comparative example 1 | | ○ | ○ | ⊚ | ⊚ | Δ |
| Comparative example 2 | | Δ | Δ | × | Δ | × |
| Comparative example 3 | | Δ | Δ | ○ | ○ | ○ |
| Comparative example 4 | | ○ | Δ | ○ | × | ○ |
| Comparative example 5 | | ⊚ | ○ | × | ⊚ | ○ |

**Table 10 Evaluation of examples and comparative examples of Embodiment 1**

| ZN | | Corrosion resistance | | Acid resistance | Alkali resistance | Stability |
|---|---|---|---|---|---|---|
| | | Plane part | Wrought part | | | |
| Example | No.49 | ○ | ○ | ○ | ○ | ⊚ |
| | No.50 | ⊚ | ⊚ | ⊚ | ○ | ⊚ |
| | No.51 | ⊚ | ⊚ | ⊚ | ○ | ⊚ |
| | No.52 | ⊚ | ⊚ | ⊚ | ○ | ⊚ |
| | No.53 | ⊚ | ⊚ | ⊚ | ○ | ⊚ |
| | No.54 | ⊚ | ⊚ | ⊚ | ○ | ⊚ |
| | No.55 | ⊚ | ⊚ | ⊚ | ○ | ⊚ |
| | No.56 | ⊚ | ⊚ | ⊚ | ○ | ⊚ |
| Comparative example 1 | | ○ | ○ | ⊚ | ⊚ | Δ |
| Comparative example 2 | | ○ | ⊚ | × | Δ | × |
| Comparative example 3 | | ○ | ⊚ | ○ | ○ | ○ |
| Comparative example 4 | | ○ | Δ | ○ | × | ○ |
| Comparative example 5 | | ○ | ○ | × | ⊚ | ○ |

**Table 11 Examples of Embodiment 2**

| | Organic compound A | Organic compound B | A:B (mol ratio) | Organic resin Q | | Metallic compound C | | Acid D | | Colloidal dispersion E | |
|---|---|---|---|---|---|---|---|---|---|---|---|
| | | | | | Q/(A+B) | | C/Si | | D/Si | | E/Si |
| No.1 | A1 | B1 | 2:1 | Q1 | 0.1 | C1 | 0.03 | Phosphoric acid | - | - | - |
| No.2 | A1 | B1 | 2:1 | Q1 | 0.5 | C2 | 1.2 | Phosphoric acid | 0.8 | ZrO₂ | 1.5 |
| No.3 | A1 | B2 | 2:1 | Q1 | 20 | C3 | 3.7 | Phosphoric acid | 2.4 | TiO₂ | 0.2 |
| No.4 | A1 | B2 | 2:1 | Q2 | 1 | C4 | 5.4 | Hydrofluoric acid | 1.5 | Sn | 3.8 |
| No.5 | A1 | B5 | 2:1 | Q2 | 5 | C5 | 2.1 | Hydrofluoric acid | 3.2 | Hf | 2.7 |
| No.6 | A2 | B3 | 2:1 | Q2 | 10 | C6 | 0.01 | Hydrofluoric acid | 9.4 | Ce | 5.4 |
| No.7 | A3 | B3 | 2:1 | Q3 | 3 | C7 | 9.9 | Hydrofluoric acid | 3.1 | Nb | 6.8 |
| No.8 | A4 | B1 | 2:1 | Q3 | 15 | C8 | 8.2 | Formic acid | 5.4 | SiO₂ | 0.05 |
| No.9* | A4 | B2 | 2:1 | Q4 | 10 | C9 | 0.4 | Butyric acid | 0.04 | ZrO₂ | 2.4 |
| No.10* | A4 | B4 | 2:1 | Q4 | 20 | C10 | 6.2 | Acetic acid | 3.2 | TiO₂ | 3.9 |
| No.11* | A5 | B1 | 1:2 | Q4 | 50 | C11 | 8.1 | Oxalic | 4.8 | Sn | 2.5 |
| No.12 | A6 | B1 | 1:2 | Q5 | 40 | C12 | 3.4 | Succinic acid | 3.6 | Hf | 0.01 |
| No.13 | A7 | B1 | 1:2 | Q5 | 80 | C13 | 6.4 | Lactic acid | 8.7 | Ce | 3.3 |
| No.14 | A8 | B1 | 1:2 | Q6 | 20 | C14 | 2.2 | Tartaric acid | 6.4 | Nb | 7.8 |
| No.15 | A9 | B1 | 1:2 | Q6 | 45 | C15 | 0.1 | Citric acid | 3.1 | SiO₂ | 6.4 |

| | | | | | | | | | | | |
|---|---|---|---|---|---|---|---|---|---|---|---|
| *For reference only and outside the scope of the claimed invention | | | | | | | | | | | |

**Table 12 Evaluation of examples and comparative examples of Embodiment 2**

| EG | | Corrosion resistance | | Acid resistance | Alkali resistance | Stability |
|---|---|---|---|---|---|---|
| | | Plane part | Wrought part | | | |
| | No.1 | ⊚ | ⊚ | ⊚ | ⊚ | ⊚ |
| | No.2 | ○ | ○ | ⊚ | ⊚ | ⊚ |
| | No.3 | ⊚ | ⊚ | ⊚ | ⊚ | ⊚ |
| | No.4 | ⊚ | ⊚ | ⊚ | ⊚ | ⊚ |
| | No.5 | ○ | ○ | ⊚ | ⊚ | ⊚ |
| | No.6 | ⊚ | ○ | ⊚ | ⊚ | ⊚ |
| | No.7 | ⊚ | ○ | ○ | ○ | ⊚ |
| Example | No.8 | ⊚ | ⊚ | ○ | ○ | ⊚ |
| | No.9* | ○ | ○ | ⊚ | ○ | ⊚ |
| | No.10* | ⊚ | ⊚ | ⊚ | ○ | ⊚ |
| | No.11* | ⊚ | ⊚ | ⊚ | ○ | ⊚ |
| | No.12 | ○ | ○ | ⊚ | ○ | ⊚ |
| | No.13 | ⊚ | ○ | ⊚ | ○ | ⊚ |
| | Nο.14 | ⊚ | ○ | ○ | ○ | ⊚ |
| | No.15 | ⊚ | ⊚ | ○ | ○ | ⊚ |
| Comparative example 1 | | ○ | ○ | ⊚ | ⊚ | Δ |
| Comparative example 2 | | Δ | × | × | Δ | × |
| Comparative example 3 | | Δ | x | ○ | × | ○ |
| Comparative example 4 | | ○ | Δ | ○ | ○ | ○ |
| Comparative example 5 | | ⊚ | ⊚ | × | ⊚ | ○ |

**Table 13 Evaluation of examples and comparative examples of Embodiment 2**

| GF | | Corrosion resistance | | Acid resistance | Alkali resistance | Stability |
|---|---|---|---|---|---|---|
| | | Plane part | Wrought part | | | |
| | No.1 | ○ | ○ | ⊚ | ⊚ | ⊚ |
| | No.2 | ○ | ○ | ⊚ | ⊚ | ⊚ |
| | No.3 | ⊚ | ○ | ⊚ | ⊚ | ⊚ |
| | No.4 | ⊚ | ⊚ | ⊚ | ⊚ | ⊚ |
| | No.5 | ○ | ○ | ⊚ | ⊚ | ⊚ |
| | No.6 | ⊚ | ⊚ | ⊚ | ⊚ | ⊚ |
| | No.7 | ⊚ | ⊚ | ○ | ○ | ⊚ |
| Example | No.8 | ⊚ | ○ | ○ | ○ | ⊚ |
| | No.9* | ○ | ○ | ⊚ | ○ | ⊚ |
| | No.10* | ⊚ | ○ | ⊚ | ○ | ⊚ |
| | No.11* | ⊚ | ⊚ | ⊚ | ○ | ⊚ |
| | No.12 | ○ | ○ | ⊚ | ○ | ⊚ |
| | No.13 | ⊚ | ⊚ | ⊚ | ○ | ⊚ |
| | No.14 | ⊚ | ⊚ | ○ | ○ | ⊚ |
| | No.15 | ⊚ | ○ | ○ | ○ | ⊚ |
| Comparative example 1 | | ○ | ○ | ⊚ | ⊚ | Δ |
| Comparative example 2 | | ○ | ○ | × | Δ | × |
| Comparative example 3 | | ⊚ | ○ | ○ | ○ | ○ |
| Comparative example 4 | | ○ | Δ | ○ | × | ○ |
| Comparative example 5 | | ○ | ○ | × | ⊚ | ○ |

| | | | | | | |
|---|---|---|---|---|---|---|
| *For reference only and outside the scope of the claimed invention | | | | | | |

**Table 14 Evaluation of examples and comparative examples of Embodiment 2**

| ZN | | Corrosion resistance | | Acid resistance | Alkali resistance | Stability |
|---|---|---|---|---|---|---|
| | | Plane part | Wrought part | | | |
| | No.1 | ⊚ | ⊚ | ⊚ | ⊚ | ⊚ |
| | No.2 | ○ | ○ | ⊚ | ⊚ | ⊚ |
| | No.3 | ⊚ | ⊚ | ⊚ | ⊚ | ⊚ |
| | No.4 | ⊚ | ⊚ | ⊚ | ⊚ | ⊚ |
| | No.5 | ○ | ○ | ⊚ | ⊚ | ⊚ |
| | No.6 | ⊚ | ○ | ⊚ | ⊚ | ⊚ |
| | No.7 | ⊚ | ○ | ○ | ○ | ⊚ |
| Example | No.8 | ⊚ | ⊚ | ○ | ○ | ⊚ |
| | No.9* | ○ | ○ | ⊚ | ○ | ⊚ |
| | No.10* | ⊚ | ⊚ | ⊚ | ○ | ⊚ |
| | No. 11* | ⊚ | ⊚ | ⊚ | ○ | ⊚ |
| | No.12 | ○ | ○ | ⊚ | ○ | ⊚ |
| | No.13 | ⊚ | ○ | ⊚ | ○ | ⊚ |
| | No.14 | ⊚ | ○ | ○ | ○ | ⊚ |
| | No.15 | ⊚ | ⊚ | ○ | ○ | ⊚ |
| Comparative example 1 | | ○ | ○ | ⊚ | ⊚ | Δ |
| Comparative example 2 | | ○ | Δ | × | Δ | × |
| Comparative example 3 | | ○ | Δ | ○ | ○ | ○ |
| Comparative example 4 | | ○ | Δ | ○ | × | ○ |
| Comparative example 5 | | ○ | ⊚ | × | ⊚ | ○ |

**Table 15 Evaluation of examples and comparative examples of Embodiment 2**

| GI | | Corrosion resistance | | Acid resistance | Alkali resistance | Stability |
|---|---|---|---|---|---|---|
| | | Plane part | Wrought part | | | |
| | No.1 | ○ | ○ | ⊚ | ⊚ | ⊚ |
| | No.2 | ○ | ○ | ⊚ | ⊚ | ⊚ |
| | No.3 | ⊚ | ○ | ⊚ | ⊚ | ⊚ |
| | No.4 | ⊚ | ⊚ | ⊚ | ⊚ | ⊚ |
| | No.5 | ○ | ○ | ⊚ | ⊚ | ⊚ |
| | No.6 | ⊚ | ⊚ | ⊚ | ⊚ | ⊚ |
| | No.7 | ⊚ | ⊚ | ○ | ○ | ⊚ |
| Example | No.8 | ⊚ | ○ | ○ | ○ | ⊚ |
| | No.9* | ○ | ○ | ⊚ | ○ | ⊚ |
| | No.10* | ⊚ | ○ | ⊚ | ○ | ⊚ |
| | No.11* | ⊚ | ⊚ | ⊚ | ○ | ⊚ |
| | No.12 | ○ | ○ | ⊚ | ○ | ⊚ |
| | No.13 | ⊚ | ⊚ | ⊚ | ○ | ⊚ |
| | No.14 | ⊚ | ⊚ | ○ | ○ | ⊚ |
| | Nο.15 | ⊚ | ○ | ○ | ○ | ⊚ |
| Comparative example 1 | | ○ | ○ | ⊚ | ⊚ | Δ |
| Comparative example 2 | | ○ | Δ | × | Δ | × |
| Comparative example 3 | | ○ | Δ | ○ | ○ | ○ |
| Comparative example 4 | | ○ | Δ | ○ | × | ○ |
| Comparative example 5 | | ⊚ | ⊚ | × | ⊚ | ○ |

| | | | | | | |
|---|---|---|---|---|---|---|
| *For reference only and outside the scope of the claimed invention | | | | | | |

**Table 16 Evaluation of examples and comparative examples of Embodiment 2**

| GL | | Corrosion resistance | | Acid resistance | Alkali resistance | Stability |
|---|---|---|---|---|---|---|
| | | Plane part | Wrought part | | | |
| | No.1 | ○ | ○ | ⊚ | ⊚ | ⊚ |
| | No.2 | ○ | ○ | ⊚ | ⊚ | ⊚ |
| | No.3 | ⊚ | ⊚ | ⊚ | ⊚ | ⊚ |
| | No.4 | ⊚ | ○ | ⊚ | ⊚ | ⊚ |
| | No.5 | ○ | ○ | ⊚ | ⊚ | ⊚ |
| | No.6 | ⊚ | ○ | ⊚ | ⊚ | ⊚ |
| | No.7 | ⊚ | ⊚ | ○ | ○ | ⊚ |
| Example | No.8 | ⊚ | ⊚ | ○ | ○ | ⊚ |
| | No.9* | ○ | ○ | ⊚ | ○ | ⊚ |
| | No.10* | ⊚ | ⊚ | ⊚ | ○ | ⊚ |
| | No.11* | ⊚ | ○ | ⊚ | ○ | ⊚ |
| | No.12 | ○ | ○ | ⊚ | ○ | ⊚ |
| | No.13 | ⊚ | ○ | ⊚ | ○ | ⊚ |
| | No.14 | ⊚ | ⊚ | ○ | ○ | ⊚ |
| | No.15 | ⊚ | ⊚ | ○ | ○ | ⊚ |
| Comparative example 1 | | ○ | ○ | ⊚ | ⊚ | Δ |
| Comparative example 2 | | Δ | Δ | × | Δ | × |
| Comparative example 3 | | Δ | Δ | ○ | ○ | ○ |
| Comparative example 4 | | ○ | Δ | ○ | × | ○ |
| Comparative example 5 | | ⊚ | ○ | × | ⊚ | ○ |

**Table 17 Evaluation of examples and comparative examples of Embodiment 2**

| GA | | Corrosion resistance | | Acid resistance | Alkali resistance | Stability |
|---|---|---|---|---|---|---|
| | | Plane part | Wrought part | | | |
| | No.1 | ○ | ⊚ | ⊚ | ⊚ | ⊚ |
| | No.2 | ○ | ○ | ⊚ | ⊚ | ⊚ |
| | No.3 | ○ | ○ | ⊚ | ⊚ | ⊚ |
| | No.4 | ⊚ | ○ | ⊚ | ⊚ | ⊚ |
| | No.5 | ○ | ○ | ⊚ | ⊚ | ⊚ |
| | No.6 | ⊚ | ⊚ | ⊚ | ⊚ | ⊚ |
| | No.7 | ⊚ | ⊚ | ○ | ○ | ⊚ |
| Example | No.8 | ⊚ | ⊚ | ○ | ○ | ⊚ |
| | No.9* | ○ | ○ | ⊚ | ○ | ⊚ |
| | No.10* | ○ | ○ | ⊚ | ○ | ⊚ |
| | No.11* | ⊚ | ○ | ⊚ | ○ | ⊚ |
| | No.12 | ○ | ○ | ⊚ | ○ | ⊚ |
| | No.13 | ⊚ | ⊚ | ⊚ | ○ | ⊚ |
| | No.14 | ⊚ | ⊚ | ○ | ○ | ⊚ |
| | No.15 | ⊚ | ⊚ | ○ | ○ | ⊚ |
| Comparative example 1 | | ○ | ○ | ⊚ | ⊚ | Δ |
| Comparative example 2 | | Δ | Δ | × | Δ | × |
| Comparative example 3 | | Δ | Δ | ○ | ○ | ○ |
| Comparative example 4 | | ○ | Δ | ○ | × | ○ |
| Comparative example 5 | | ⊚ | ○ | × | ⊚ | ○ |

| | | | | | | |
|---|---|---|---|---|---|---|
| *For reference only and outside the scope of the claimed invention | | | | | | |

**Table 18 Evaluation of examples and comparative examples of Embodiment 2**

| AL | | Corrosion resistance | | Acid resistance | Alkali resistance | Stability |
|---|---|---|---|---|---|---|
| | | Plane part | Wrought part | | | |
| | No.1 | ○ | ⊚ | ○ | ⊚ | ⊚ |
| | No.2 | ○ | ○ | ○ | ○ | ⊚ |
| | No.3 | ⊚ | ⊚ | ⊚ | ⊚ | ⊚ |
| | No.4 | ⊚ | ○ | ○ | ⊚ | ⊚ |
| | Nο.5 | ○ | ○ | ○ | ○ | ⊚ |
| | No.6 | ⊚ | ○ | ⊚ | ⊚ | ⊚ |
| | No.7 | ⊚ | ⊚ | ○ | ⊚ | ⊚ |
| Example | No.8 | ○ | ○ | ○ | ○ | ⊚ |
| | No.9* | ○ | ○ | ○ | ○ | ⊚ |
| | No.10* | ⊚ | ⊚ | ⊚ | ⊚ | ⊚ |
| | No.11* | ⊚ | ○ | ○ | ⊚ | ⊚ |
| | Nο.12 | ○ | ○ | ○ | ○ | ⊚ |
| | No.13 | ⊚ | ○ | ⊚ | ⊚ | ⊚ |
| | No.14 | ⊚ | ⊚ | ○ | ⊚ | ⊚ |
| | Nο.15 | ○ | ○ | ○ | ○ | ⊚ |
| Comparative example 1 | | ○ | ○ | ⊚ | ⊚ | Δ |
| Comparative example 2 | | ○ | ⊚ | × | Δ | × |
| Comparative example 3 | | ○ | ⊚ | ○ | ○ | ○ |
| Comparative example 4 | | ○ | Δ | ○ | × | ○ |
| Comparative example 5 | | ○ | ⊚ | × | ⊚ | ○ |

| | | | | | | |
|---|---|---|---|---|---|---|
| *For reference only and outside the scope of the claimed invention | | | | | | |

## Claims

1. An aqueous metal surface-treating agent wherein an organic compound (A) having a functional group (I), an organic compound (B) having a functional group (II) capable of reacting with the functional group (I) and at least one hydrophilic functional group (III) selected from hydroxyl groups which are different from those containable in the following functional groups (a), primary, secondary and tertiary amino groups, quaternary ammonium groups, phosphoric acid groups, phosphonic acid groups, sulfonic acid groups and polyoxyethylene chains, all these groups and chains being different from those capable of being included in the functional groups (I) and/or the functional groups (II), and at least one organic polymer (Q) selected from urethane resins, epoxy resins, acrylic resins, polyester resins and polyolefin resins are compounded; and at least one of the organic compound (A) and the organic compound (B) is an organic silane compound having a functional group (a) represented by the formula -SiR¹R²R³, wherein R¹, R² and R³ represent mutually independently alkyl groups, alkoxyl groups or hydroxyl groups, and at least one of them is an alkoxyl group,
in which aqueous metal surface-treating agent,
the organic compound (A) is selected from epoxy silanes; amino silanes; mercapto silanes; isocyanato silanes; epoxy compounds selected from sorbitol polyglycidyl ethers, polyglycerol polyglycidyl ethers and pentaerythritol polyglycidyl ethers; isocyanate compounds; methylol group-containing compounds; active methylene-containing compounds; and imido compounds, and
the organic compound (B) is selected from amino silanes; amine compounds selected from isophoronediamine, piperazine and diphenylmethanediamine; polyoxyethylene adducts of epoxy compounds; hydroxylamines selected from ethanolamine and propanolamine; polyhydric alcohols; aminethiols; aminosulfonic acids; hydroxyphosphonic acids; diaminoalkylsulfonic acids; and amino acids.

2. The surface-treating agent according to claim 1 wherein, in the organic compound (A), the epoxy silanes are selected from
3-glycidyloxypropyltrimethoxysilane, 3-glycidyloxypropylmethyldimethoxysilane
and 2-(3,4-epoxycyclohexyl)ethyltrimethoxysilane; the amino silanes are selected from N-(2-aminoethyl)-3-aminopropylmethyldimethoxysilane,
N-(aminoethyl)-3-aminopropyltrimethoxysilane and 3-aminopropyltriethoxysilane; the mercapto silane is 3-mercaptopropyltrimethoxysilane; the isocyanato silanes are selected from 3-isocyanatopropyltrimethoxysilane and
3-isocyanatopropyltriethoxysilane; the isocyanate compounds are selected from tolylene diisocyanate, diphenylmethane diisocyanate, naphthalene diisocyanate and xylylene diisocyanate; the methylol group-containing compound is dimethylolpropionic acid; the active methylene-containing compound is acetoacetoxy acrylate; the imido compound is N,N'-isopropylcarbodiimide, and in the organic compound (B), the amino silanes are selected from N-(2-aminoethyl)-3-aminopropylmethyldimethoxysilane, N-(aminoethyl)-3-aminopropyltrimethoxysilane and 3-aminopropyltriethoxysilane; the
polyoxyethylene adducts of epoxy compounds are selected from neopenytyl glycol diglycidyl ether, 1,6-hexanediol diglycidyl ether and hydrogenated bisphenol A diglycidyl ether; the polyhydric alcohols are glycols; the aminethiol is 2-aminoethanethiol or 2-aminopropanethiol; the aminosulfonic acid is 2-amino-1-naphthalenesulfonic acid; the hydroxyphosphonic acid is α-glycerophosphonic acid; and the amino acids are selected from glycine, alanine and glutamic acid.

3. The surface-treating agent according to claim 1 or 2 wherein the mass ratio of the compounding amount of the organic polymer (Q) to the total compounding amount (A+B) of the organic compound (A) and the organic compound (B), Q/(A+B), is 0.01 to 80.

4. The surface-treating agent according to any one of claims 1 to 3 wherein a metallic compound (C) containing a bivalent or more metallic ion (when the metallic ion is a Zr ion, Ti ion, a Hf ion or a Ce ion, the case where the metallic compound (C) is a colloidal dispersoid is excluded) is compounded.

5. The surface-treating agent according to claim 4 wherein the bivalent or more metallic ion is at least one selected from Ti, Zr, Hf, V, Mg, Mn, Zn, W, Mo, Al, Ni, Co, Ce and Ca ions.

6. The surface-treating agent according to Claim 4 or 5 wherein the mass ratio of the content of the metallic compound (C) to the content of Si derived from the functional group (a), in a coating obtained from the surface-treating agent, C/Si, is 0.01 to 10.0.

7. The surface-treating agent according to any one of claims 1 to 6 wherein a product formed by reaction of the organic compound (A) with the organic compound (B) has at least one siloxane bond formed by condensation of two or more functional groups (a).

8. The surface-treating agent according to any one of claims 1 to 7 wherein at least one acid (D) selected from hydrofluoric acid, organic acids and phosphoric acid is compounded.

9. The surface-treating agent according to claim 8 wherein the mass ratio of the content of the acid (D) to the content of Si derived from the functional group (a), in a coating obtained from the surface-treating agent, D/Si, is 0.01 to 10.0.

10. The surface-treating agent according to any one of claims 1 to 9 wherein a collodial dispersion (E) of the simple substance or compound of at least one element selected from Si, Zr, Ti, Sn, Hf, Ce and Nb is compounded.

11. A process for surface-treating a metallic material which comprises applying the surface-treating agent according to any one of claims 1 to 10 onto the surface of the metallic material, and drying the resulting surface-treating agent to form a coating of 10 to 3,000 mg/m² in terms of SiO₂.

12. A metallic material surface-treated by the process according to claim 11.

## Patentansprüche

1. Wässriges Metalloberflächen-Behandlungsmittel, wobei eine Verbindung (A), die eine funktionelle Gruppe (I) aufweist, eine organische Verbindung (B), die eine funktionelle Gruppe (II), die in der Lage ist, mit der funktionelle Gruppe (I) zu reagieren, und zumindest eine hydrophile funktionelle Gruppe (III), ausgewählt aus Hydroxylgruppen, die von denen verschieden sind, die in den nachstehenden funktionellen Gruppen (a) enthalten sind, primären, sekundären und tertiären Aminogruppen, quaternären Ammoniumgruppen, Phosphorsäuregrupen, Phosphonsäuregruppen, Sulfonsäuregruppen und Polyoxyethylenketten, aufweist, wobei alle diese Gruppen und Ketten, die sich von denen unterscheiden, die in den funktionellen Gruppen (I) und/oder den funktionellen Gruppen (II) enthalten sind, und zumindest ein organisches Polymer (Q), ausgewählt aus Urethanharzen, Epoxidharzen, Acrylsäureharzen, Polyesterharzen, und Polyolefinharzen, kompoundiert sind, und zumindest eine der organischen Verbindung (A) und der organischen Verbindung (B) eine organische Silanverbindung ist, die eine funktionelle Gruppe (a), dargestellt durch die Formel -SiR¹R²R³, aufweist, worin R¹, R² und R³ voneinander unabhängig Alkylgruppen, Alkoxylgruppen oder Hydroxylgruppen darstellen und zumindest eine von diesen eine Alkoxylgruppe ist,
wobei in dem wässrigen Metalloberflächen-Behandlungsmittel
die organische Verbindung (A) aus Epoxysilanen; Aminosilanen; Mercaptosilanen; Isocyanatsilanen; Epoxyverbindungen, ausgewählt aus Sorbitpolyglycidylethern, Polyglycerinpolyglycidylethern und Pentaerythritpolyglycidylethern; Isocyanatverbindungen; methylolgruppenhaltigen Verbindungen; aktives Methylen enthaltenden Verbindungen und Imidverbindungen ausgewählt ist, und
die organische Verbindung (B) aus Aminosilanen; Aminverbindungen, ausgewählt aus Isophorondiamin, Piperazin und Diphenylmethandiamin; Polyoxyethylen-Addukten von Epoxyverbindungen; Hydroxylaminen, ausgewählt aus Ethanolamin und Propanolamin; mehrwertigen Alkoholen; Aminthiolen; Aminosulfonsäuren; Hydroxyphosphonsäuren; Diaminoalkylsulfonsäuren und Aminosäuren ausgewählt ist.

2. Oberflächenbehandlungsmittel gemäss Anspruch 1, wobei in der organischen Verbindung (A)
die Epoxysilane aus 3-Glycidyloxypropyltrimethoxysilan, 3-Glycidyloxypropylmethyldimethoxysilan und 2-(3,4-Epoxycyclohexyl)ethyltrimethoxysilan ausgewählt sind;
die Aminosilane aus N-(2-Aminoethyl)-3-aminopropylmethyldimethoxysilan, N-(Aminoethyl)-3-aminopropyltrimethoxysilan und 3-Aminopropyltriethoxysilan ausgewählt sind;
das Mercaptosilan 3-Mercaptopropyltrimethoxysilan ist;
die Isocyanatsilane aus 3-Isocyanatpropyltrimethoxysilan und 3-Isocyanatpropyltriethoxysilan ausgewählt sind;
die Isocyanatverbindungen aus Tolylendiisocyanat, Diphenylmethandiisocyanat, Naphthalindiisocyanat und Xylylendiisocyanat ausgewählt sind;
die methylolgruppenhaltige Verbindung Dimethylolpropionsäure ist;
die aktives Methylen enthaltende Verbindung Acetoacetoxyacrylat ist;
die Imidoverbindung N,N'-Isopropylcarbodiimid ist,
und in der organischen Verbindung (B)
die Aminosilane aus N-(2-Aminoethyl)-3-aminopropylmethyldimethoxysilan, N-(Aminoethyl)-3-aminopropyltrimethoxysilan und 3-Aminopropyltriethoxysilan ausgewählt sind;
die Polyoxyethylen-Addukte der Epoxyverbindungen aus Neopentylglykoldiglycidylether, 1,6-Hexandioldiglycidylether und hydriertem Bisphenol A-Diglycidylether ausgewählt sind;
die mehrwertigen Alkohole Glykole sind;
das Aminthiol 2-Aminoethanthiol oder 2-Aminopropanthiol ist;
die Aminosulfonsäure 2-Amino-1-naphthalinsulfonsäure ist;
die Hydroxyphosphonsäure α-Glycerophosphonsäure ist und
die Aminosäuren aus Glycin-, Alanin- und Glutaminsäure ausgewählt sind.

3. Oberflächenbehandlungsmittel gemäss Anspruch 1 oder 2, wobei das Masseverhältnis der kompoundierten Menge an organischem Polymer (Q) zu der gesamten kompoundierten Menge (A+B) der organischen Verbindung (A) und der organischen Verbindung (B), Q/(A+B), 0,01 zu 80 beträgt.

4. Oberflächenbehandlungsmittel gemäss irgendeinem der Ansprüche 1 bis 3, wobei eine metallische Verbindung (C), die ein zwei- oder mehrwertiges Metallion enthält (wenn das Metallion ein Zr-Ion, ein Ti-Ion, ein Hf-Ion oder ein Ce-Ion ist, ist der Fall, in dem die metallische Verbindung (C) ein kolloidales Dispersoid ist, ausgeschlossen) kompoundiert ist.

5. Oberflächenbehandlungsmittel gemäss Anspruch 4, wobei das zwei- oder mehrwertige Metallion zumindest eines, ausgewählt aus Ti-, Zr-, Hf-, V-, Mg-, Mn-, Zn-, W-, Mo-, Al-, Ni-, Co-, Ce- und Ca-Ionen, ist.

6. Oberflächenbehandlungsmittel gemäss Anspruch 4 oder 5, wobei das Masseverhältnis des Gehalts an metallischer Verbindung (C) zu dem Gehalt an von der funktionellen Gruppe (a) stammendem Si in einer von dem Oberflächenbehandlungsmittel erhaltenen Beschichtung, C/Si, 0,01 zu 10,0 beträgt.

7. Oberflächenbehandlungsmittel gemäss irgendeinem der Ansprüche 1 bis 6, wobei ein durch Reaktion der organischen Verbindung (A) mit der organischen Verbindung (B) gebildetes Produkt zumindest eine Siloxanbindung aufweist, die durch Kondensation von zwei oder mehr funktionellen Gruppen (a) gebildet ist.

8. Oberflächenbehandlungsmittel gemäss irgendeinem der Ansprüche 1 bis 7, wobei zumindest eine Säure (D), ausgewählt aus Fluorwasserstoffsäure, organischen Säuren und Phosphorsäure, kompoundiert ist.

9. Oberflächenbehandlungsmittel gemäss Anspruch 8, wobei das Masseverhältnis des Gehalts an Säure (D) zu dem Gehalt an von der funktionellen Gruppe (a) stammendem Si in einer von dem Oberflächenbehandlungsmittel erhaltenen Beschichtung, D/Si, 0,01 zu 10,0 beträgt.

10. Oberflächenbehandlungsmittel gemäss irgendeinem der Ansprüche 1 bis 9 wobei eine kolloidale Dispersion (E) der einfachen Subtanz oder Verbindung aus zumindest einem Element, ausgewählt aus Si, Zr, Ti, Sn, Hf, Ce und Nb, kompoundiert ist.

11. Verfahren zur Oberflächenbehandlung eines metallischen Materials, das das Aufbringen des Oberflächenbehandlungsmittel gemäss einem der Ansprüche 1 bis 10 auf die Oberfläche eines metallischen Materials und Trocknen des resultierenden Oberflächenbehandlungsmittels umfasst, um eine Beschichtung von 10 bis 3.000 mg/m², bezogen auf SiO₂, zu bilden.

12. Metallisches Material, das nach dem Verfahren gemäss Anspruch 11 behandelt ist.

## Revendications

1. Agent aqueux de traitement de surface métallique dans lequel un composé organique (A) ayant un groupe fonctionnel (I), un composé organique (B) ayant un groupe fonctionnel (II) capable de réagir avec le groupe fonctionnel (I) et au moins un groupe fonctionnel hydrophile (III) sélectionné parmi les groupes hydroxyle qui sont différents de ceux pouvant être contenus dans les groupes fonctionnels (a) suivants, les groupes amino primaire, secondaire et tertiaire, les groupes ammonium quaternaire, les groupes acide phosphorique, les groupes acide phosphonique, les groupes acide sulfonique et les chaînes polyoxyéthylène, tous ces groupes et chaînes étant différents de ceux capables d'être inclus dans les groupes fonctionnels (I) et/ou les groupes fonctionnels (II), et au moins un polymère organique (Q) sélectionné parmi les résines d'uréthane, les résines époxy, les résines acryliques, les résines de polyester et les résines de polyoléfine sont mélangés ; et au moins l'un parmi le composé organique (A) et le composé organique (B) est un composé de silane organique ayant un groupe fonctionnel (a) représenté par la formule -SiR¹R²R³, dans lequel R¹, R² et R³ représentent mutuellement de manière indépendante des groupes alkyle, des groupes alcoxyle ou des groupes hydroxyle, et au moins l'un d'entre eux est un groupe alcoxyle,
dans ledit agent aqueux de traitement de surface métallique,
le composé organique (A) est sélectionné parmi les époxy silanes ; les amino silanes ; les mercapto silanes ; les isocyanato silanes ; les composés époxy sélectionnés parmi les sorbitol polyglycidyl éthers, les polyglycérol polyglycidyl éthers et les pentaérythritol polyglycidyl éthers ; les composés d'isocyanate ; les composés contenant un groupe méthylol ; les composés contenant un méthylène actif; et les composés d'imido, et
le composé organique (B) est sélectionné parmi les amino silanes ; les composés d'amine sélectionnés parmi l'isophoronediamine, la pipérazine et la diphényl-méthanediamine ; les adduits de polyoxyéthylène de composés époxy; les hydroxylamines sélectionnées parmi l'éthanolamine et la propanolamine ; les alcools polyhydriques ; les aminethiols ; les acides aminosulfoniques ; les acides hydroxy-phosphoniques ; les acides diaminoalkylsulfoniques ; et les acides aminés.

2. Agent de traitement de surface selon la revendication 1 dans lequel, dans le composé organique (A), les époxy silanes sont sélectionnés parmi
le 3-glycidyloxypropyltriméthoxysilane, le 3-glycidyloxypropylméthyldiméthoxy-silane et le 2-(3,4-époxycyclohexyl)éthyltriméthoxysilane ; les amino silanes sont sélectionnés parmi le N-(2-aminoéthyl)-3-aminopropylméthyldiméthoxysilane, le N-(aminoéthyl)-3-aminopropyltriméthoxysilane et le 3-aminopropyltriéthoxysilane ; le mercapto silane est le 3-mercaptopropyltriméthoxysilane ; les isocyanato silanes sont sélectionnés parmi le 3-isocyanatopropyltriméthoxysilane et le 3-isocyanatopropyl-triéthoxysilane ; les composés d'isocyanate sont sélectionnés parmi le diisocyanate de tolylène, le diisocyanate de diphénylméthane, le diisocyanate de naphtalène et le diisocyanate de xylylène ; le composé contenant un groupe méthylol est l'acide diméthylolpropionique ; le composé contenant un méthylène actif est l'acrylate d'acétoacétoxy ; le composé d'imido est le N,N'-isopropylcarbodiimide, et dans le composé organique (B), les amino silanes sont sélectionnés parmi le N-(2-aminoéthyl)-3-aminopropylméthyldiméthoxysilane, le N-(aminoéthyl)-3-aminopropyltriméthoxysilane et le 3-aminopropyltriéthoxysilane ; les adduits de polyoxyéthylène de composés époxy sont sélectionnés parmi le néopenytyl glycol diglycidyl éther, le 1,6-hexanediol diglycidyl éther et le bisphénol A diglycidyl éther hydrogéné ; les alcools polyhydriques sont les glycols ; l'aminethiol est le 2-aminoéthanethiol ou le 2-aminopropanethiol ; l'acide aminosulfonique est l'acide 2-amino-1-naphtalènesulfonique; l'acide hydroxy-phosphonique est l'acide α-glycérophosphonique; et les acides aminés sont sélectionnés parmi la glycine, l'alanine et l'acide glutamique.

3. Agent de traitement de surface selon la revendication 1 ou 2 dans lequel le rapport en masse entre la quantité de mélange du polymère organique (Q) et la quantité totale de mélange (A+B) du composé organique (A) et du composé organique (B), Q/(A+B), est de 0,01 à 80.

4. Agent de traitement de surface selon l'une quelconque des revendications 1 à 3 dans lequel un composé métallique (C) contenant un ion métallique bivalent ou plus (quand l'ion métallique est un ion de Zr, un ion de Ti, un ion de Hf ou un ion de Ce, le cas où le composé métallique (C) est un dispersoïde colloïdal est exclu) est mélangé.

5. Agent de traitement de surface selon la revendication 4 dans lequel l'ion métallique bivalent ou plus est au moins l'un sélectionné parmi les ions de Ti, Zr, Hf, V, Mg, Mn, Zn, W, Mo, Al, Ni, Co, Ce et Ca.

6. Agent de traitement de surface selon la revendication 4 ou 5 dans lequel le rapport en masse entre la teneur en composée métallique (C) et la teneur en Si dérivé du groupe fonctionnel (a), dans un revêtement obtenu à partir de l'agent de traitement de surface, C/Si, est de 0,01 à 10,0.

7. Agent de traitement de surface selon l'une quelconque des revendications 1 à 6 dans lequel un produit formé par la réaction du composé organique (A) avec le composé organique (B) présente au moins une liaison siloxane formée par la condensation de deux ou plus de deux groupes fonctionnels (a).

8. Agent de traitement de surface selon l'une quelconque des revendications 1 à 7 dans lequel au moins un acide (D) sélectionné parmi l'acide fluorhydrique, les acides organiques et l'acide phosphorique est mélangé.

9. Agent de traitement de surface selon la revendication 8 dans lequel le rapport en masse entre la teneur en acide (D) et la teneur en Si dérivé du groupe fonctionnel (a), dans un revêtement obtenu à partir de l'agent de traitement de surface, D/Si, est de 0,01 à 10,0.

10. Agent de traitement de surface selon l'une quelconque des revendications 1 à 9 dans lequel une dispersion colloïdale (E) de la substance simple ou du composé simple d'au moins un élément sélectionné parmi Si, Zr, Ti, Sn, Hf, Ce et Nb est mélangée.

11. Procédé de traitement d'une surface d'un matériau métallique qui comprend l'application de l'agent de traitement de surface selon l'une quelconque des revendications 1 à 10 sur la surface du matériau métallique, et le séchage de l'agent de traitement de surface résultant pour former un revêtement de 10 à 3000 mg/m² en termes de SiO₂.

12. Matériau métallique traité en surface par le procédé selon la revendication 11.
